# EUROPEAN PATENT SPECIFICATION

(11) **EP 4 447 141 B1**
(45) Date of publication and mention of the grant of the patent: **03.06.2026**
(21) Application number: 23831886.9
(22) Date of filing: 28.06.2023
(51) Int. Cl.: H01M 4/13, H01M 4/139, H01M 4/04, H01M 4/66, H01M 4/02

(54) **POSITIVE ELECTRODE FOR LITHIUM SECONDARY BATTERY, AND MANUFACTURING METHOD THEREOF**
POSITIVELEKTRODE FÜR LITHIUMSEKUNDÄRBATTERIE UND HERSTELLUNGSVERFAHREN DAFÜR
ÉLECTRODE POSITIVE POUR UNE BATTERIE SECONDAIRE AU LITHIUM ET SON PROCÉDÉ DE FABRICATION

(30) Priority: 28.06.2022 KR 20220079042; 27.06.2023 KR 20230082429
(43) Date of publication of application: 16.10.2024
(73) Proprietor: LG Energy Solution, Ltd., Seoul 07335 (KR)
(72) Inventor: KANG, Ho Jun, Daejeon 34122 (KR); KIM, Sung Myung, Daejeon 34122 (KR); LEE, Min Ji, Daejeon 34122 (KR); PARK, Sang Hwan, Daejeon 34122 (KR)
(74) Representative: Plasseraud IP
(86) International application number: PCT/KR2023/008994
(87) International publication number: WO 2024/005527

(56) References cited:
- WO-A1-2021/210287
- CN-A- 111 326 711
- JP-A- 2016 081 848
- JP-A- 2019 003 789
- JP-A- 2021 026 885
- US-A1- 2010 119 932

## Description

### [Technical Field]

The present invention relates to a positive electrode for a lithium secondary battery and a manufacturing method thereof.

This application claims the benefit of priority based on Korean Patent Applications No. 10-2022-0079042, filed on June 28, 2022, and Korean Patent Applications No. 10-2023-0082429, filed on June 27, 2023,.

### [Background Technology of the Invention]

In recent years, lithium secondary batteries have been widely applied not only in small devices such as portable electronics, but also in medium and large devices such as battery packs or power storage in hybrid or electric vehicles.

These lithium secondary batteries are power generators that can be charged and discharged, consisting of a laminated structure of a positive electrode, a separator, and a negative electrode, wherein the positive electrode generally includes lithium metal oxide as a positive electrode active material and the negative electrode includes a carbon-based negative electrode active material such as graphite. In addition, lithium secondary batteries have a configuration in which lithium ions released from the positive electrode are absorbed into the carbon-based negative electrode active material of the negative electrode during charging, and lithium ions contained in the carbon-based negative electrode active material are absorbed into the lithium metal oxide of the positive electrode during discharging, and charge and discharge are repeated.

One of the factors that determines the performance of a lithium secondary battery is the capacity ratio of the active materials contained in the positive electrode and negative electrode, respectively. The capacity ratio of each electrode active material can be expressed as the N/P ratio. The N/P ratio is the total capacity of the negative electrode obtained by considering the capacity per unit area and/or per unit weight of the negative electrode, divided by the total capacity of the positive electrode obtained by considering the capacity per unit area and/or per unit weight of the positive electrode, and is generally controlled to have a value of 1 or more, as it has a significant impact on the safety and capacity of the battery.

However, when manufacturing the positive electrode and negative electrode, a sliding phenomenon is induced at the end of the electrode composite layer including the active material. Therefore, the N/P ratio is difficult to be consistently satisfied at each end of the positive electrode and negative electrode. In particular, if the N/P ratio becomes smaller than 1, when the battery is charged, lithium ions cannot intercalate into the negative electrode active material and precipitate on the negative electrode surface, forming a dendrite. This dendrite can cause an internal short circuit of the battery, which reduces the safety of the battery.

In addition, when electrodes are produced by slitting according to the coating pattern of the electrode composite layer to improve productivity, there is a problem that the N/P ratio reversal phenomenon frequently occurs. To prevent this, conventional methods have been applied to make the coating width of the negative electrode composite layer wider than the coating width of the positive electrode composite layer. However, this method has the limitation that the amount of slurry for forming the negative electrode composite layer is increased, which increases the processing cost. In addition, when the negative electrode slurry is widely applied on the negative electrode current collector, the tab portion of the negative electrode to be manufactured narrows, not only causing interference problems when notching or welding the tabs, but also makes it difficult to control the position of the electrodes during electrode stacking such as zigzag-stacking, which limits the applicable battery models.

Therefore, there is a need to develop electrode technology that can be applied to various battery models with better processability and productivity while controlling the N/P ratio of the positive electrode and negative electrode more easily.

### [Prior Art Documents]

Korean Patent Publication No. 10-2015-0028457
Korean Patent Publication No. 10-2016-0125720
US Patent Publication No. US2010/119932 A1

### [Description of the Invention]

### [Technical Problem]

Accordingly, it is an object of the present invention to provide an electrode for a lithium secondary battery and a manufacturing method thereof that can easily control the N/P ratio of the positive electrode and negative electrode, while having high processability and productivity and being applicable to various battery models.

### [Technical Solution]

To solve the aforementioned problems, the present invention is defined in the appended set of claims and provides a positive electrode for lithium secondary battery including:
a positive electrode current collector,
an insulating layer provided on at least one side of the positive electrode current collector, and
a positive electrode active material layer provided on the insulating layer;
wherein the insulating layer is discontinuously disposed on the positive electrode current collector based on a cross-sectional structure transversal from one side where the positive electrode tabs are disposed to the other side where the positive electrode tabs are not disposed and has a structure completely covered by the positive electrode active material layer.

Here, the positive electrode active material layer, is divided into a flat portion located in a center region and having a constant thickness, a sliding portion located at an edge of the flat portion and having a thickness gradient, and a boundary portion located between the flat portion and the sliding portion, based on a cross-sectional structure transversal from one side where the positive electrode tabs are disposed to the other side where the positive electrode tabs are not disposed; wherein the insulating layer may be located on the inside of at least one of the sliding portion and the boundary portion.

Moreover, the insulating layer may have a length of 30mm or less based on a cross-sectional structure transversal from one side where the positive electrode tabs are disposed to the other side where the positive electrode tabs are not disposed.

In addition, the insulating layer may have a thickness ratio of 30% or less with respect to the average thickness of the flat portion.

Furthermore, the insulating layer may include: one or more metal oxides selected from the group consisting of Al₂O₃, Cr₂O₃, TiO₂, SiO₂, ZrO₂, and Fe₂O₃; and one or more binders selected from the group consisting of polyvinylidene fluoride (PVdF), polyvinylidene fluoride copolymer, polyvinyl alcohol, polyethylene oxide, cellulose acetate, polyacrylonitrile, polyacrylate rubber, polymethacrylate, polyvinyl acetate, and styrene-butadiene rubber.

In addition, the insulating layer may include 50 wt% or less of a metal oxide; and 50 wt% or more of a binder.

Moreover, the sliding portion of the positive electrode active material layer may further include an auxiliary insulating layer on the outer side.

In addition, the auxiliary insulating layer may include: one or more metal oxides selected from the group consisting of Al₂O₃, Cr₂O₃, TiO₂, SiO₂, ZrO₂, and Fe₂O₃; and one or more binders selected from the group consisting of polyvinylidene fluoride (PVdF), polyvinylidene fluoride copolymer, polyvinyl alcohol, polyethylene oxide, cellulose acetate, polyacrylonitrile, polyacrylate rubber, polymethacrylate, polyvinyl acetate, and styrene-butadiene rubber, wherein the metal oxides and binders in the auxiliary insulating layer may be the same or different from the metal oxides and binders included in the insulating layer.

Additionally, the present invention provides a manufacturing method of a positive electrode for lithium secondary battery including:
forming an insulating layer provided on at least one side of a positive electrode current collector, and
forming a positive electrode active material layer provided on the insulating layer that has been formed;
wherein the insulating layer is patterned along the traveling direction of the positive electrode current collector, and is discontinuously disposed on the positive electrode current collector and having a structure completely covered by the positive electrode active material layer, based on a cross-sectional structure transversal from one side where the positive electrode tabs are disposed to the other side where the positive electrode tabs are not disposed.

Here, forming the insulating layer may be performed using a slot die coater, a slot nozzle coater, or a gravure coater.

In addition, the insulating layer may be formed using an insulating layer coating composition comprising a metal oxide and a binder, and the insulating layer coating composition may have a viscosity of 1,000 to 10,000 cps at 25°C.

Moreover, forming the active material layer may be performed by a wet process using a positive electrode slurry comprising a positive electrode active material and a binder; or a dry process using a film for the positive electrode comprising a positive electrode active material and a binder.

In addition, forming the active material layer may further include forming an auxiliary insulating layer on the outer side of a sliding portion of an active material layer that has been formed.

Furthermore, the present invention provides an electrode assembly for lithium secondary battery including a positive electrode according to the above-described present invention: a negative electrode; and a separator disposed between the positive electrode and negative electrode.

### [Advantageous Effects]

The positive electrode for a lithium secondary battery according to the present invention includes an insulating layer and a positive electrode active material layer sequentially on at least one side of the positive electrode current collector, but has a cross-sectional structure in which the insulating layer is completely covered on the inside of the edge of the positive electrode active material layer. Accordingly, the positive electrode is easy to control the shape of the edge (or end) of the positive electrode active material layer, and the capacity per unit area/per unit weight of the end of the positive electrode active material layer is significantly reduced. Therefore, the positive electrode has the advantage of being applicable to various battery models because it is easy to control the N/P ratio when assembled with the negative electrode.

### [Brief Description of the Drawings]

FIG. 1 is a plan view and a cross-sectional view illustrating the location and cross-sectional structure of an insulating layer and a positive electrode active material layer formed on the positive electrode current collector during the manufacture of the positive electrode, in one exemplary embodiment according to the present invention.
FIGS. 2 and 3 are plan view and cross-sectional view illustrating the structure of a positive electrode manufactured during punching (or notching) of a positive electrode current collector formed with an insulating layer and an active material layer as in FIG. 1.
FIGS. 4 and 5 are schematic cross-sectional views illustrating the structure of the positive electrode assembly according to the present invention.

### [Best Mode for Carrying out the Invention]

The present invention may have various modifications and various examples, and specific examples are illustrated in the drawings and described in detail in the description.

However, it should be understood that the present invention is not limited to specific embodiments, and is defined by the appended claims.

The terms "comprise," "include" and "have" are used herein to designate the presence of characteristics, numbers, steps, actions, components or members described in the specification or a combination thereof, and it should be understood that the possibility of the presence or addition of one or more other characteristics, numbers, steps, actions, components, members or a combination thereof is not excluded in advance.

In addition, when a part of a layer, a film, a region or a plate is disposed "on" another part, this includes not only a case in which one part is disposed "directly on" another part, but a case in which a third part is interposed there between. In contrast, when a part of a layer, a film, a region or a plate is disposed "under" another part, this includes not only a case in which one part is disposed "directly under" another part, but a case in which a third part is interposed there between. In addition, in this application, "on" may include not only a case of disposed on an upper part but also a case of disposed on a lower part.

Hereinafter, the present invention will be described in more detail.

### Positive Electrode for Lithium Secondary Battery

In one embodiment, the present invention provides a positive electrode for lithium secondary battery including: a positive electrode current collector, an insulating layer provided on at least one side of the positive electrode current collector, and a positive electrode active material layer provided on the insulating layer; wherein
the insulating layer is discontinuously disposed on the positive electrode current collector based on a cross-sectional structure transversal from one side where the positive electrode tabs are disposed to the other side where the positive electrode tabs are not disposed and has a structure completely covered by the positive electrode active material layer.

The electrode for lithium secondary batteries according to the present invention may be an electrode that is applied to a lithium secondary battery, where it may be either a positive electrode or a negative electrode that requires less capacity per unit area/per unit weight of the active material layer end.

The positive electrode for a lithium secondary battery includes a positive electrode active material layer provided on at least one side of the positive electrode current collector, and an insulating layer between the positive electrode active material layer and the positive electrode current collector. In this case, the insulating layer is located in a region where the thickness of the active material layer is thinned, specifically, at an edge of the active material layer, so that the N/P ratio of the electrode itself can be easily controlled. The N/P ratio has the advantage of being controllable even during a positive electrode manufacturing process using a coating pattern or during stacking of manufactured positive electrodes.

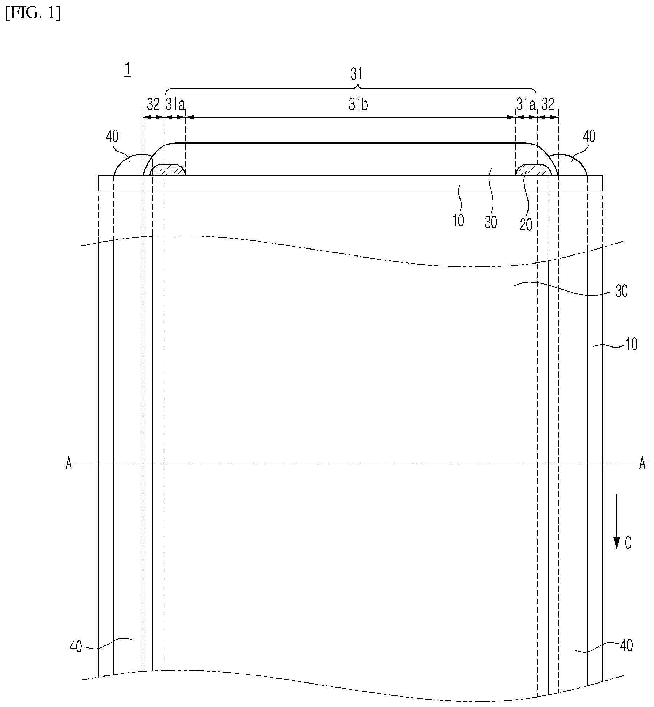

FIG. 1 is a surface view and a cross-sectional view showing a positive electrode current collector in which an insulating layer and a positive electrode active material layer are formed in the manufacture of a positive electrode according to the present invention.

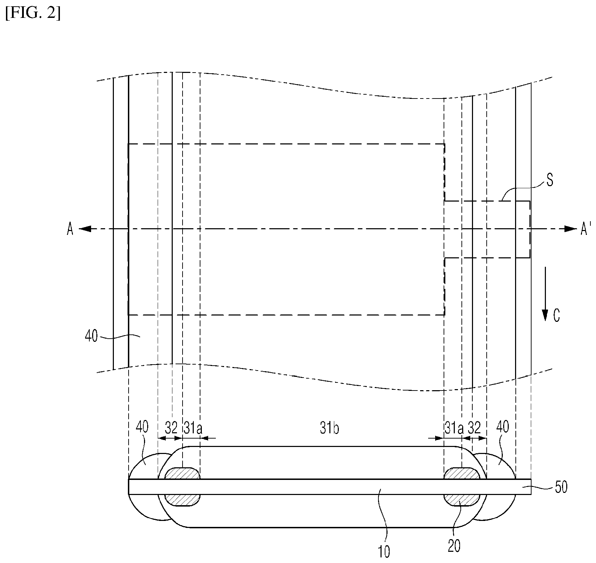

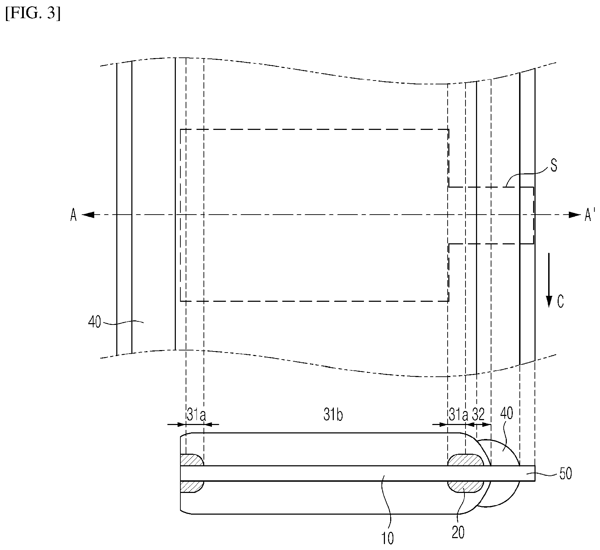

Additionally, FIGS. 2 and 3 are cross-sectional views illustrating the structure of a positive electrode manufactured when the positive electrode current collector shown in FIG. 1 is punched (or notched).

Hereinafter, referring to FIGS. 1 to 3, a structure of a positive electrode for a lithium secondary battery according to the present invention will be described.

Positive electrode 1 for a lithium secondary battery according to the present invention has a cross-sectional structure in which a positive electrode active material layer 30 is provided on a positive electrode current collector 10, and an insulating layer 20 is arranged therebetween. In other words, the positive electrode 1 for a lithium secondary battery has a structure in which the insulating layer 20 and the positive electrode active material layer 30 are sequentially stacked on the positive electrode current collector 10.

In this case, the positive electrode active material layer 30 is a layer implementing the electrical activity of the positive electrode 1, and is manufactured by applying a positive electrode slurry including a positive electrode active material implementing an electrochemical redox reaction during charging and discharging of the lithium secondary battery to at least one side of the positive electrode current collector 10, and then drying and rolling it. As shown in FIGS. 1 to 3, the positive electrode active material layer 30 thus prepared is divided into a flat portion 31b located in the center region and having a constant thickness, a sliding portion 32 located at the edge of the flat portion and having a thickness gradient, and a boundary portion 31a located between the flat portion and the sliding portion, based on a cross-sectional structure (A-A', hereinafter referred to as "cross-sectional structure A-A')" transversal from one side A' where the positive electrode tabs 50 are disposed to the other side A where the positive electrode tabs 50 are not disposed.

Specifically, the positive electrode active material layer 30 includes a flat portion 31b having a ratio of 90% or more of the total length of the positive electrode active material layer 30 in the cross-sectional structure A-A'. The flat portion 31b refers to a region having a flat surface due to a constant thickness. The flat portion 31b is a region comprising a majority of the positive electrode active material layer 30, which may have a length ratio of 93% or more; 95% or more; 97% or more; or 96% to 99% of the total length of the positive electrode active material layer 30. By adjusting the length ratio of the flat portion 31b in the positive electrode active material layer 30 to the above ranges, the present invention can further increase the energy density of the positive electrode.

Furthermore, the flat portion 31b accounts for more than 90% of the total length of the positive electrode active material layer 30, so that its average thickness may be the same as or equal to the average thickness of the positive electrode active material layer 30.

In this case, the average thickness of the positive electrode active material layer 30 may be 50 µm to 500 µm, more specifically, 50 µm to 400 µm; 50 µm to 300 µm; 50 µm to 200 µm; 50 µm to 150 µm; 100 µm to 300 µm; 150 µm to 450 µm; 200 µm to 400 µm; 250 µm to 500 µm; 80 µm to 190 µm; 80 µm to 140 µm; 100 µm to 250 µm; or 130 µm to 190 µm.

Further, a boundary portion 31a is located on the outer side of the flat portion 31b, and a sliding portion 32 is located on the outer side of the boundary portion 31a.

In one example, the boundary portion 31a and the sliding portion 32 may be disposed sequentially on both sides of the flat portion 31b, as shown in FIG. 2.

As another example, the boundary portion 31a and the sliding portion 32 may be sequentially and continuously disposed only on one side of the flat portion 31b, specifically on the side where the positive electrode tabs 50 are provided, due to the punching (or notching) of the positive electrode sheet performed during the positive electrode manufacturing process as shown in FIG. 3, and only a part of them may or may not be present on the other side where the positive electrode tabs 50 are not provided.

The sliding portion 32 refers to a region having a thickness gradient by being located at an edge of the positive electrode active material layer 30. The sliding portion may have a ratio of 3% or less of the total length of the positive electrode active material layer 30 based on the cross-sectional structure A-A'. Specifically, the sliding portion 32 has a form in which the thickness decreases from the region adjacent to the boundary portion 31a to the outer edge of the positive electrode active material layer 30. Such sliding portion 32 may have a ratio of 2% or less; 1% or less; 0.5% or less; 0.01% to 1%; or 0.01% to 0.5% of the total length of the positive electrode active material layer 30 based on the cross-sectional structure A-A' in consideration of the energy density of the positive electrode. In this case, the above length ratio is a total length ratio arranged based on the cross-sectional structure A-A' of the positive electrode active material layer 30, and when the sliding portion 32 is arranged on both sides of the flat portion 31b as shown in FIG. 1, the length ratio of each sliding portion may be halved to 1/2 of the above length ratio.

The boundary portion 31a is located between the flat portion 31b and the sliding portion 32 and is a region forming a boundary therebetween, and may have a constant thickness like the flat portion 31b so as to have a flat surface. The boundary portion 31a may occupy a residual length excluding the aforementioned length ratio of the flat portion 31b and the sliding portion 32. For example, the boundary portion 31a may have a ratio of less than 7%; less than 5%; less than 4%; less than 2.5%; less than 0.09% to 3%; or 0.5 to 1% of the total length of the positive electrode active material layer 30 based on the cross-sectional structure A-A' of the positive electrode active material layer 30. The boundary portions 31a may be halved to 1/2 of the length ratio for each boundary portion when the boundary portions 31a are provided on both sides of the flat portion 31b, as are the sliding portions 32.

Furthermore, the length of the boundary portion 31a based on the cross-sectional structure A-A' may have a ratio of 50% to 300% with respect to the average thickness of the positive electrode active material layer 30, more specifically, may have a ratio of 50% to 200%; 50% to 150%; 50% to 100%; 100% to 300%; 100% to 200%; or 150% to 300%.

Furthermore, the boundary portion 31a may have a length of 0.8 to 1.2 times the length of the sliding portion 32 relative to the cross-sectional structure A-A', and in some cases may be equal to the length of the sliding portion 32.

By controlling the length ratio of the boundary portion 31a of the positive electrode active material layer 30 as described above, the present invention can more accurately control the position of the insulating layer provided on the inside of the positive electrode active material layer. By doing so, the present invention can prevent the N/P ratio of the electrode assembly from being reduced to less than 1 even if the end of the positive electrode is beyond the end of the negative electrode when the positive electrode and negative electrode are assembled.

For this purpose, an insulating layer 20 is provided on the inside of the edge of the positive electrode active material layer 30. In this case, the insulating layer 20 is located on the inside of the edge of the active material layer 30 and has the function of inducing a decrease in the capacity per unit area/per unit weight at the end of the positive electrode active material layer 30 based on the cross-sectional structure A-A', and at the same time adjusting the inclination angle (or sliding angle) and/or shape of the sliding portion 32.

Specifically, the insulating layer 20 may be selectively disposed only on the inside of the edge of the positive electrode active material layer 30 based on the cross-sectional structure A-A', so that it has a structure that is discontinuously arranged on the positive electrode current collector 10 when analyzing the cross-sectional structure A-A' of the positive electrode 1. In this case, it is advantageous to implement a higher energy density of the positive electrode 1 compared to the case where the insulating layer 20 is continuously arranged on the positive electrode current collector 10 to form a single layer.

In addition, the insulating layer 20 is provided on the inside of the edge of the positive electrode active material layer 30, but its position may be adjusted appropriately to adjust the energy density of the positive electrode and the N/P ratio during electrode assembly. Specifically, the insulating layer 20 may be located on the inside of one or more of the boundary portion 31a and the sliding portion 32 of the positive electrode active material layer 30. For example, the insulating layer 20 may be located on the inside of the boundary portion 31a or the inside of the sliding portion 32 of the positive electrode active material layer 30, and in some cases, one insulating layer 20 may be located on the insides of the boundary portion 31a and the sliding portion 32.

Furthermore, referring to FIGS. 2 and 3, the positive electrode 1 for a lithium secondary battery according to the present invention is manufactured by sequentially stacking an insulating layer 20 and a positive active material layer 30 on the positive electrode current collector 10, followed by punching (or notching). At this time, among the edges of the positive electrode active material layer 30 of the punched positive electrode, the insulating layer 20 may be disposed on the edge of a side where the positive electrode tab 50 is located, that is, on a tab portion (A' side). Furthermore, in some cases, the insulating layer 20 may optionally be further disposed on the edge of the other side of the tab portion, that is, the bottom portion (A side).

In general, lithium secondary batteries are subject to lithium precipitation from the surface of the negative electrode end during charge and discharge. One of the causes of lithium precipitation occurs when the N/P ratio, which represents the capacity per unit area/weight of the positive electrode and negative electrode contained in the electrode assembly, falls below 1 at the end. Therefore, it is desirable to prevent the N/P ratio at the end of the electrode assembly from falling below 1 in order to suppress lithium precipitation from the surface of the negative electrode end.

The present invention is characterized in that the capacity per unit area/per unit weight of the end of the positive electrode active material layer 30 is lowered by introducing an insulating layer 20 at the end of the positive electrode active material layer 30. Accordingly, the positive electrode 1 can maintain an N/P ratio of 1 or more at the end of the electrode assembly when assembled with the negative electrode. Here, the end of the positive electrode active material layer 30 is a portion corresponding to a side of the positive electrode active material layer 30 in the cross-sectional structure A-A', and is included in the sliding portion 32. Thus, the positive electrode 1 according to the present invention may include the insulating layer 20 on the inside of the sliding portion 32 including the end of the positive electrode active material layer 30.

In addition, the average thickness or loading amount of the positive electrode active material layer 30 varies depending on the model or product specification of the lithium secondary battery to which the positive electrode 1 is applied. The average thickness or loading amount of the positive electrode active material layer 30 may be controlled by the viscosity of the positive electrode slurry used during formation of the positive electrode active material layer 30. Here, since the degree to which the positive electrode slurry is pushed outward from the edge of the applied positive electrode slurry varies depending on the viscosity (i.e., "flowability") of the positive electrode slurry, the inclination angle (or sliding angle) or shape of the sliding portion 32 of the positive electrode active material layer 30 may vary depending on the viscosity. Since the sliding portion 32 of the positive electrode active material layer 30 may cause various safety problems such as causing an internal short circuit depending on the inclination angle or shape, it is necessary to control the inclination angle or shape. However, there is a limitation that the inclination angle or shape of the sliding portion 32 is difficult to control when the sliding portion 32 is present in the tab portion (A' side) where the positive electrode tab 50 is disposed. Accordingly, the present invention includes an insulating layer 20 on the inside of the boundary portion 31a of the positive electrode active material layer 30, so that the inclination angle (or sliding angle) and/or shape of the sliding portion 32 can be controlled. The shape of the insulating layer 20 can be controlled by increasing the inclination angle of the sliding portion 32 from the inside of the boundary portion 31a and shortening the length ratio of the sliding portion 32 when forming the positive electrode active material layer 30.

Thus, the positive electrode 1 according to the present invention may include the insulating layer 20 exclusively on the inside of the boundary portion 31a or on the inside of the sliding portion 32 of the positive electrode active material layer 30. Preferably, the positive electrode 1 may include one insulating layer 20 on the inside across the boundary portion 31a and the sliding portion 32, as shown in FIG. 1.

Furthermore, the insulating layer 20 according to the present invention may have a structure in which it is completely covered by the positive electrode active material layer 30 based on the cross-sectional structure A-A' and is not exposed to the outside. By having such a structure, the insulating layer 20 may be maintained inside the active material layer 30 even when the electrode assembly process is carried out after punching (or notching) during the electrode manufacturing process. Therefore, the positive electrode 1 of the present invention includes an insulating layer 20 completely covered by the positive electrode active material layer 30, which enables effective control of the loading amount or the capacity per unit area/per unit weight of the positive electrode active material layer 30 regardless of the manufacturing method or process. In addition, the positive electrode active material layer 30 has the problem that it is difficult to control the inclination angle (or sliding angle) or shape of the sliding portion 32 when the insulating layer 20 is not completely covered by the positive electrode active material layer 30.

In addition, the size of the insulating layer 20 may be controlled in order to have a structure that is completely covered by the positive electrode active material layer 30 without reducing the energy density of the positive electrode active material layer 30.

Specifically, the insulating layer 20 may have a length (or width) based on the cross-sectional structure A-A' that satisfies a predetermined range. In one example, the insulating layer 20 may have a length of 30 mm or less based on the cross-sectional structure A-A', specifically, a length of 0.2 to 30 mm; 0.5 to 30 mm; 1 to 30 mm; 5 to 30 mm; 10 to 30 mm; 15 to 25 mm; 5 to 20 mm; 10 to 25 mm; 1 to 20 mm; 0.5 to 5 mm; 0.5 to 10 mm; 0.2 to 1 mm; or 10 to 15 mm.

In one example, the sliding portion 32 may have a length of 5 to 18 mm; or 1 to 4 mm when the boundary between the non-coated portion of the electrode current collector and the sliding portion 32 is clear, as shown in FIG. 1.

The length (or width) of the insulating layer 20 is affected by the length (or width) and thickness of the sliding portion 32, as it must be included on the inside of the boundary portion 31a and/or the sliding portion 32. Thus, the present invention can facilitate control of the shape of the sliding portion 32 and the expression capacity of the positive electrode active material layer 30 by adjusting the length (or width) of the insulating layer 20 to the ranges described above.

Furthermore, the insulating layer 20 may have a thickness ratio of 30% or less relative to the thickness of the flat portion. Specifically, the insulating layer 20 may have a thickness of 1 to 30%; 1 to 25%; 1 to 20%; 5 to 20%; 10 to 25%; 15 to 30%; 20 to 30%; 13 to 22%; or 8 to 20% relative to the thickness of the flat portion.

By adjusting the average thickness of the insulating layer 20 to the above range, the present invention can prevent the insulating effect of the insulating layer 20 and the capacitance reduction effect of the positive electrode active material layer 30 end from being fully implemented due to a significantly thin thickness. In addition, the present invention can prevent the sliding angle and/or shape control of the end of the positive electrode active material layer 30 from becoming difficult due to an excessive thickness of the insulating layer 20.

Additionally, the insulating layer 20 may be made of a material that does not electrochemically express a charge/discharge capacity in order to implement insulation and at the same time lower the capacity per unit area/per unit weight of the end of the positive electrode active material layer 30. Specifically, the insulating layer 20 may have a structure in which inorganic particles and binders that exhibit insulating properties are mixed. As one example, the insulating layer 20 may include one or more metal oxides selected from Al₂O₃, Cr₂O₃, TiO₂, SiO₂, ZrO₂, and Fe₂O₃; and one or more binders selected from polyvinylidene fluoride (PVdF), polyvinylidene fluoride copolymer, polyvinyl alcohol, polyethylene oxide, cellulose acetate, polyacrylonitrile, polyacrylate rubber, polymethacrylate, polyvinyl acetate, and styrene-butadiene rubber.

The metal oxides have the advantage that they can exhibit no electrochemical capacity while implementing insulation, and can simultaneously implement mechanical properties similar to the active material layer 30. Furthermore, the binder may be highly miscible with the binder applied to the positive electrode active material layer 30, thereby imparting high adhesion to the positive electrode active material layer 30.

Moreover, the insulating layer 20 may include a metal oxide and a binder in a constant weight ratio. Specifically, the insulating layer 20 may include 50 wt% or less of the metal oxide and 50 wt% or more of the binder.

In one example, the insulating layer 20 may include 1 to 50 wt%, 1 to 40 wt%, 1 to 30 wt%, 1 to 20 wt%, or 1 to 10 wt% of the metal oxide; and 50 to 99 wt%, 60 to 99 wt%, 70 to 99 wt%; 80 to 99 wt%, or 90 to 99 wt% of the binder.

The present invention can improve the adhesion of the insulating layer 20 and the positive electrode active material layer 30 by adjusting the weight ratio of the metal oxide and the binder included in the insulating layer 20 to the above range. Furthermore, by adjusting the weight ratio of the metal oxide and the binder to the above range, the capacity per unit area/per unit weight at the end of the positive electrode active material layer 30 can be lowered in a range that does not degrade the electrical properties of the electrode.

Furthermore, the positive electrode 1 for a lithium secondary battery according to the present invention may further include an auxiliary insulating layer 40 on the outer side of the sliding portion 32 of the positive electrode active material layer 30. The auxiliary insulating layer 40 may be disposed in a form that contacts the sliding portion 32 of the positive electrode active material layer 30. Accordingly, the auxiliary insulating layer 40 may have a form in which it is provided continuously with the sliding portion of the positive electrode active material layer 30 in a cross-sectional structure of the positive electrode 1, and the sliding portion may have a side end covered by the auxiliary insulating layer 40. Thereby, the positive electrode 1 may prevent contact between the positive electrode and the negative electrode due to shrinkage of the separator occurring at the end of the positive electrode active material layer 30 when the cell is exposed to a high temperature. In other words, the auxiliary insulating layer 40 may have the function of preventing contact between the positive electrode and the negative electrode due to shrinkage of the separator when the electrode assembly including the positive electrode 1 according to the present invention is exposed to a high temperature.

To this end, the auxiliary insulating layer 40 may be composed of a material that is electrochemically electrically conductive and has a low thermal conductivity in order to implement insulation and, at the same time, prevent heat generated in the positive electrode active material layer 30 from being transferred to the separator through the ends. Specifically, the auxiliary insulating layer 40 may have a mixed structure of inorganic particles and binders that exhibit insulating properties and low thermal conductivity. As one example, the auxiliary insulating layer 40 may include one or more metal oxides selected from Al₂O₃, Cr₂O₃, TiO₂, SiO₂, ZrO₂, and Fe₂O₃; and one or more binders selected from polyvinylidene fluoride (PVdF), polyvinylidene fluoride copolymer, polyvinyl alcohol, polyethylene oxide, cellulose acetate, polyacrylonitrile, polyacrylate rubber, polymethacrylate, polyvinyl acetate, and styrene-butadiene rubber.

In addition, the auxiliary insulating layer 40 may include a metal oxide and a binder in a constant weight ratio. Specifically, the auxiliary insulating layer 40 may include 50 wt% or less of the metal oxide and 50 wt% or more of the binder. In one example, the auxiliary insulating layer 40 may include 1 to 50 wt%, 1 to 40 wt%, 1 to 30 wt%, 1 to 20 wt%, or 1 to 10 wt% of the metal oxide; 50 to 99 wt%, 60 to 99 wt%, 70 to 99 wt%; 80 to 99 wt%, or 90 to 99 wt% of the binder. Here, the metal oxide and binder of the auxiliary insulating layer 40 may be the same or different in composition and content from the insulating layer 20 included within the positive active material layer 30.

Furthermore, the auxiliary insulating layer 40 may have a length (or width) based on the cross-sectional structure A-A' that satisfies a predetermined range. In one example, the insulating layer 20 may have a length (or width) of 30 mm or less based on the cross-sectional structure A-A', and more specifically, may have a length (or width) of 0.1 mm to 20 mm; 0.5 mm to 15 mm; 0.5 mm to 10 mm; 1 mm to 5 mm; 10 mm to 20 mm; 5 mm to 10 mm; or 3 mm to 8 mm.

By controlling the length (or width) of the auxiliary insulating layer 40 to the above-described range, the present invention can minimize the contact area of the positive electrode active material layer 30 and the separator, thereby preventing shrinkage of the separator upon exposure to high temperatures, and increasing the economic efficiency and processability of the positive electrode to be manufactured.

Meanwhile, the positive electrode active material layer 30 includes a positive electrode active material, and in some cases may further include a conductive material, a binder, or other additives.

Specifically, the positive electrode active material is an active material capable of reversibly intercalating and deintercalating lithium ions, and may include one or more among lithium metal complex oxide represented by Chemical Formula 1 and lithium iron phosphate represented by Chemical Formula 2:

[Chemical Formula 1] Liₓ[Ni_{y}Co_{z}Mn_{w}M¹ᵥ]Oᵤ

[Chemical Formula 2] LiFe₁₋ₚM²ₚPO_{q}

In Chemical Formulas 1 and 2,
M¹ is one or more doping elements selected from the group consisting of W, Cu, Fe, V, Cr, Zr, Zn, Al, In, Ta, Y, La, Sr, Ga, Sc, Gd, Sm, Ca, Ce, Nb, Mg, B, and Mo,
x, y, z, w, v, and u are 1.0≤x≤1.30, 0.6≤y<0.95, 0.01<z≤0.5, 0.01<w≤0.5, 0≤v≤0.2, and 1.5≤u≤4.5, respectively,
M² is one or more doping elements selected from the group consisting of Ni, Co, Mn, and V,
p and q are 0.05≤p≤0.2 and 2≤q≤6, respectively.

In one example, the lithium metal complex oxides represented by Chemical Formula 1 may include one or more selected from Li(Ni_{0.6}C_{0.2}Mn_{0.2})O₂, Li(Ni_{0.7}Co_{0.15}Mn_{0.15})O₂, Li(Ni_{0.8}Co_{0.1}Mn_{0.1})O₂, Li(Ni_{0.9}Co_{0.05}Mn_{0.05})O₂, Li(Ni_{0.6}Co_{0.2}Mn_{0.1}Zr_{0.1})O₂, Li(Ni_{0.6}Co_{0.2}Mn_{0.15}Zr_{0.05})O₂, and Li(Ni_{0.7}Co_{0.1}Mn_{0.1}Zr_{0.1})O₂. In addition, the lithium iron phosphate represented by Chemical Formula 2 may include LiFePO₄ and the like.

The positive electrode active material may be 85 to 95 parts by weight, more specifically 88 to 95 parts by weight, 90 to 95 parts by weight, 86 to 90 parts by weight, or 92 to 95 parts by weight, of the total 100 parts by weight of the positive electrode active material layer 30.

Furthermore, the conductive material used to improve the electrical performance of the positive electrode 1 may be any material conventionally used in the art, but may specifically include one or more types selected from the group consisting of natural graphite, artificial graphite, carbon black, acetylene black, denka black, ketjen black, super-P, channel black, furnace black, lamp black, summer black, graphene, and carbon nanotubes.

Furthermore, the conductive material may be included in 0.1 to 5 parts by weight of the total 100 parts by weight of the positive electrode active material layer 30, and more specifically may be included in 0.1 to 4 parts by weight; 2 to 4 parts by weight; 1.5 to 5 parts by weight; 1 to 3 parts by weight; 0.1 to 2 parts by weight; or 0.1 to 1 part by weight.

In addition, the binder serves to cause the positive electrode active material, positive electrode additive, and conductive material to be bonded together, and may be used without being particularly limited as long as it has this function. Specifically, the binder may include one or more resins selected from polyvinylidene fluoride-hexafluoropropylene copolymer (PVdF-co-HFP), polyvinylidenefluoride (PVdF), polyacrylonitrile, polymethylmethacrylate, or copolymers thereof. In one example, the binder may include polyvinylidenefluoride.

Moreover, the binder may be included from 1 to 10 parts by weight of the total 100 parts by weight of the positive electrode active material layer 30, more particularly, may be included from 2 to 8 parts by weight; or from 1 to 5 parts by weight.

Furthermore, as a positive electrode current collector 10, the positive electrode 1 may use a material having a high conductivity without causing chemical changes in the battery. For example, the positive electrode current collector may be stainless steel, aluminum, nickel, titanium, calcined carbon, or the like. If the positive electrode current collector is aluminum or stainless steel, it may also use those that are surface-treated with carbon, nickel, titanium, silver, or the like. Furthermore, the average thickness of the current collector may be suitably applied from 3 to 500µm, considering the conductivity and total thickness of the positive electrode to be manufactured.

By having the above-described configuration, the positive electrode for a lithium secondary battery according to the present invention is capable of significantly reducing the capacity per unit area/per unit weight of the positive electrode active material loaded on the edge (or end) of the positive electrode active material layer. Accordingly, the positive electrode is characterized in that the N/P ratio is reduced to less than 1, thereby preventing precipitation of lithium from the negative electrode surface during charging and discharging of the lithium secondary battery, thereby providing high safety. In addition, the positive electrode has the advantage of being applicable to various battery models because it is easy to control the N/P ratio when assembled with the negative electrode.

### Manufacturing Method of a positive electrode for Lithium Secondary Batteries

Furthermore, in one exemplary embodiment, the present invention provides a manufacturing method of a positive electrode for lithium secondary battery including:
forming an insulating layer provided on at least one side of the positive electrode current collector; and
forming a positive electrode active material layer provided on an insulating layer that has been formed, wherein
the insulating layer is patterned along the traveling direction of the positive electrode current collector, and is discontinuously disposed on the positive electrode current collector and having a structure completely covered by the positive electrode active material layer, based on a cross-sectional structure transversal from one side where the positive electrode tabs 50 are disposed to the other side where the positive electrode tabs 50 are not disposed.

A method for manufacturing a positive electrode for a lithium secondary battery according to the present invention relates to a method for manufacturing a positive electrode for a lithium secondary battery of the present invention as described above.

In the past, efforts have been made to control the inclination angle (or sliding angle) or shape of the sliding portion formed at the edge of the positive electrode active material layer, i.e., the end of the positive electrode active material layer, in terms of the safety of lithium secondary batteries. Examples include adjusting the shim off-set or shim shape, or adjusting the gap between the electrode current collector and the coater when applying the slurry comprising the active material layer. However, in the case of adjusting the shim off-set or shape, there is a problem that in-line control is not possible, there are mechanical limitations for fastening when applying a shim, and the method of adjusting the gap between the electrode current collector and the coater has a limitation that the reliability of the manufactured active material layer is reduced due to the large number of gap adjustment factors depending on the slurry composition.

However, the manufacturing method of the positive electrode according to the present invention has the configuration of preliminarily forming an insulating layer at a location corresponding to an edge of the positive electrode active material layer prior to forming the positive electrode active material layer on the positive electrode current collector, and subsequently forming the positive electrode active material layer to completely cover the formed insulating layer. Accordingly, the manufacturing method may facilitate controlling the inclination angle (or sliding angle) and/or shape of the edge end of the positive electrode active material layer while minimizing changes in the electrochemical properties of the positive electrode active material layer.

Here, forming the insulating layer may be applied without being particularly limited to any method as long as the insulating layer can be formed prior to forming the positive electrode active material layer. Specifically, this step may be performed using one or more coating devices among a slot die coater, a slot nozzle coater, and a gravure coater.

The insulating layer coating composition may include a material that does not electrochemically exhibit charge/discharge capacity in order to achieve insulation and lower the capacity per unit area/per unit weight of the positive electrode active material layer end. Specifically, the insulating layer coating composition may be a mixture of inorganic particles exhibiting insulating properties and a binder.

In one example, the insulating layer coating composition included one or more metal oxides selected from Al₂O₃, Cr₂O₃, TiO₂, SiO₂, ZrO₂, and Fe₂O₃; and one or more binders selected from polyvinylidene fluoride (PVdF), polyvinylidene fluoride copolymer, polyvinyl alcohol, polyethylene oxide, cellulose acetate, polyacrylonitrile, polyacrylate rubber, polymethacrylate, polyvinyl acetate, and styrene-butadiene rubber.

The metal oxides have the advantage that they can exhibit no electrochemical capacity while implementing insulation, and at the same time, they can implement mechanical properties similar to the active material layer after drying. In addition, the binder can be highly miscible with the binder applied to the active material layer to provide high adhesion to the active material layer.

Furthermore, the insulating layer coating composition may include a metal oxide and a binder in a constant weight ratio. Specifically, the insulating layer coating composition may include 50 wt% or less of the metal oxide and 50 wt% or more of the binder.

In one example, the insulating layer coating composition may include 1 to 50 wt%, 1 to 40 wt%, 1 to 30 wt%, 1 to 20 wt%, or 1 to 10 wt% of the metal oxide; and 50 to 99 wt%, 60 to 99 wt%, 70 to 99 wt%, 80 to 99 wt%, or 90 to 99 wt% of the binder.

The present invention can improve the adhesion of the insulating layer and the active material layer by adjusting the weight ratio of the metal oxide and the binder included in the insulating layer coating composition to the above range, and can lower the capacity at the end of the active material layer in a range that does not degrade the electrical properties of the electrode.

In addition, the insulating layer coating composition may have a viscosity of 1,000 to 10,000 cps at 25°C, and more specifically, may have a viscosity of 1,000 to 8,000 cps; 1,000 to 5,000 cps; 1,000 to 3,000 cps; 5,000 to 10,000 cps; 3,000 to 8,000 cps; or 2,000 to 5,000 cps at 25°C.

By controlling the viscosity of the insulating layer coating composition to the above viscosity range, the present invention can form the length (or width) and average thickness of the insulating layer manufactured to satisfy a predetermined value, thereby facilitating control of the inclination angle or shape of the end of the positive electrode active material layer.

Moreover, forming the active material layer may be performed as a wet process or a dry process.

In one example, if performed as a wet process, forming the active material layer may be performed by applying a positive electrode slurry including a positive electrode active material and a binder onto a positive electrode current collector having an insulating layer provided thereon, and drying the applied positive electrode slurry.

As another example, if performed as a dry process, forming the active material layer may be performed by placing and pressurizing a film for the positive electrode including a positive electrode active material and a binder onto a positive electrode current collector having an insulating layer. Here, the positive electrode slurry and film for the positive electrode may include a positive electrode active material and a binder, and may further include a conductive material, other additives, and the like.

Specifically, the negative electrode active material is a negative electrode active material capable of reversibly intercalating and deintercalating lithium ions, and may include one or more among lithium metal complex oxide represented by Chemical Formula 1 and lithium iron phosphate represented by Chemical Formula 2 below:

[Chemical Formula 1] Liₓ[Ni_{y}Co_{z}Mn_{w}M¹ᵥ]Oᵤ

[Chemical Formula 2] LiFe₁₋ₚM²ₚPO_{q}

In Chemical Formulas 1 and 2,
M¹ is one or more doping elements selected from the group consisting of W, Cu, Fe, V, Cr, Zr, Zn, Al, In, Ta, Y, La, Sr, Ga, Sc, Gd, Sm, Ca, Ce, Nb, Mg, B, and Mo,
x, y, z, w, v, and u are 1.0≤x≤1.30, 0.6≤y<0.95, 0.01<z≤0.5,0.01<w≤0.5, 0≤v≤0.2, and 1.5≤u≤4.5, respectively,
M² is one or more doping elements selected from the group consisting of Ni, Co, Mn, and V,
p and q are 0.05≤p≤0.2 and 2≤q≤6, respectively.

In one example, the lithium metal complex oxides represented by Chemical Formula 1 may include one or more selected from Li(Ni_{0.6}Co_{0.2}Mn_{0.2})O₂, Li(Ni_{0.7}Co_{0.15}Mn_{0.15})O₂, Li(Ni_{0.8}Co_{0.1}Mn_{0.1})O₂, Li(Ni_{0.9}Co_{0.05}Mn_{0.05})O₂, Li(Ni_{0.6}Co_{0.2}Mn_{0.1}Zr_{0.1})O₂, Li(Ni_{0.6}Co_{0.2}Mn_{0.15}Zr_{0.05})O₂, and Li(Ni_{0.7}Co_{0.1}Mn_{0.1}Zr_{0.1})O₂. In addition, the lithium iron phosphate represented by Chemical Formula 2 may include LiFePO₄ and the like.

In addition, the positive electrode active material may be 85 to 95 parts by weight, more specifically 88 to 95 parts by weight, 90 to 95 parts by weight, 86 to 90 parts by weight, or 92 to 95 parts by weight, of the total 100 parts by weight of the positive electrode active material layer.

In addition, the conductive material used to improve the electrical performance of the positive electrode 1 may be any material conventionally used in the art, but may specifically include one or more types selected from the group consisting of natural graphite, artificial graphite, carbon black, acetylene black, denka black, ketjen black, super-P, channel black, furnace black, lamp black, summer black, graphene, and carbon nanotubes.

Furthermore, the conductive material may be included in 0.1 to 5 parts by weight of the total 100 parts by weight of the positive electrode active material layer, and more specifically may be included in 0.1 to 4 parts by weight; 2 to 4 parts by weight; 1.5 to 5 parts by weight; 1 to 3 parts by weight; 0.1 to 2 parts by weight; or 0.1 to 1 part by weight.

In addition, the binder serves to cause the positive electrode active material and conductive material to be bonded together, and may be used without being particularly limited as long as it has this function. Specifically, the binder may include one or more resins selected from polyvinylidene fluoride-hexafluoropropylene copolymer (PVdF-co-HFP), polyvinylidenefluoride (PVdF), polyacrylonitrile, polymethylmethacrylate, or copolymers thereof. In one example, the binder may include polyvinylidenefluoride.

Moreover, the binder may be included from 1 to 10 parts by weight of the total 100 parts by weight of the positive electrode active material layer, more particularly, may be included from 2 to 8 parts by weight; or from 1 to 5 parts by weight.

Furthermore, forming the positive electrode active material layer may further include forming an auxiliary insulating layer on the outer side of the sliding portion of the formed positive electrode active material layer. As one example, if performed as a wet process, forming the auxiliary insulating layer may be performed by applying the auxiliary insulating layer coating composition to form the auxiliary insulating layer simultaneously with applying the electrode slurry including the electrode active material on the electrode current collector, or by applying the auxiliary insulating layer coating composition successively after applying the electrode slurry and drying, thereby forming the auxiliary insulating layer on the outer side of the sliding portion of the active material layer.

As another example, when forming the active material layer is performed as a dry process, the auxiliary insulating layer may be formed by laminating a film for the positive electrode so that the insulating layer is completely covered on the positive electrode current collector in which the insulating layer is formed, and then applying and drying an auxiliary insulating layer coating composition to the outer end of the film for the positive electrode to form the auxiliary insulating layer.

By applying the auxiliary insulating layer coating composition in the manner described above, the present invention can prevent the positive electrode slurry applied on the positive electrode current collector from being pushed to the non-coated portion, resulting in a lowering of the inclination angle of the sliding portion.

Forming the active material layer may be performed in a manner conventional in the art when performed as a wet process, but more specifically may be performed using one or more coating devices among a slot die coater, a slot nozzle coater, and a gravure coater.

Meanwhile, the manufacturing method of a positive electrode for a lithium secondary battery according to the present invention may further include punching after forming an active material layer or forming an auxiliary insulating layer on a sliding portion of the active material layer.

In this case, punching may punch the electrode so that the insulating layer disposed at the bottom portion is completely covered by the active material layer, as shown in FIG. 2, or may punch the electrode so that the insulating layer disposed at the bottom portion is partially notched to expose an end of the insulating layer, as shown in FIG. 3.

The method of manufacturing an electrode for a lithium secondary battery according to the present invention, having the above-described configuration, can implement a cross-sectional structure in which includes an insulating layer and a positive electrode active material layer sequentially on the positive electrode current collector, but the insulating layer is completely covered on the inside of the edge of the positive electrode active material layer. Thus, the manufactured positive electrode has a significantly reduced capacity per unit area/per unit weight of the positive electrode active material loaded on the edge (or end) of the positive electrode active material layer. Accordingly, the positive electrode has the advantage of being applicable to various battery models because it is easy to control the N/P ratio when assembled with the negative electrode.

### Electrode Assembly for Lithium Secondary Batteries

Furthermore, the present invention provides an electrode assembly for a lithium secondary battery including an electrode according to the present invention as described above.

An electrode assembly for a lithium secondary battery according to the present invention has a structure including a positive electrode, a negative electrode, and a separator disposed between the positive electrode and negative electrode, wherein the positive electrode includes a positive electrode according to the invention described earlier. Since the positive electrode provided in the electrode assembly has the same structure as the previously described positive electrode, a specific description will be omitted.

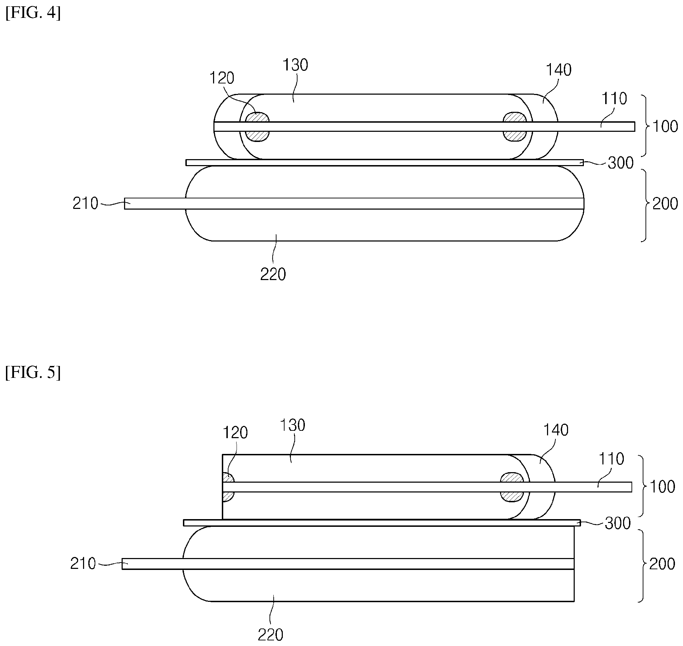

FIGS. 4 and 5 are cross-sectional views schematically illustrating the structure of the electrode assembly. Referring to FIGS. 4 and 5, the electrode assembly according to the present invention may have a structure including a negative electrode 200 and a positive electrode 100 according to the present invention, with a separator 300 provided between them. In this case, the positive electrode 100 includes a positive electrode current collector 110, an insulating layer 120 provided on the positive electrode current collector, and a positive electrode active material layer 130 provided on the insulating layer. The positive active material layer 130 includes, based on a cross-sectional structure A-A' transversal from one side where the positive electrode tabs 50 are disposed to the other side where the positive electrode tabs 50 are not disposed, a flat portion located in a center region and having a constant thickness; a sliding portion located at the edge of the flat portion and having a thickness gradient; and a boundary portion located between the flat portion and the sliding portion. Here, the insulating layer 120 is located on the inside of at least one among the sliding portion and the boundary portion of the positive active material layer 130, and may have a structure that is completely covered by them.

The positive electrode 100 with such a structure has the advantage of being applicable to various battery models, as the amount per unit area/per unit weight of the positive electrode active material loaded on the edge (or end) of the positive electrode active material layer 130 is significantly reduced, thereby facilitating control of the N/P ratio when assembled with the negative electrode 200. Furthermore, electrode assemblies including the electrode of the present invention are significantly less likely to have an N/P ratio of less than 1, which effectively prevents safety issues caused by lithium precipitation from the negative electrode surface during charge and discharge of lithium secondary batteries.

In addition, the positive electrode 100 may further include an auxiliary insulating layer 140 on the outer side of the sliding portion of the positive electrode active material layer 130. In this case, the auxiliary insulating layer 140 may be disposed in a form that contacts the sliding portion of the positive electrode active material layer 130. Accordingly, the auxiliary insulating layer 140 may have a form in which it is provided continuously with the sliding portion of the positive electrode active material layer 130 in a cross-sectional structure of the positive electrode 100, and the sliding portion may have a side end covered by the auxiliary insulating layer 140. Thereby, the positive electrode 100 may prevent contact between the positive electrode 100 and the negative electrode 200 due to shrinkage of the separator 300 occurring at the end of the positive electrode active material layer 130 when the battery is exposed to a high temperature.

Like the positive electrode 100, the negative electrode 200 includes a negative electrode active material layer 220 including a negative electrode active material on at least one side of the negative electrode current collector 210.

The negative electrode active material layer 220 includes a carbon-based negative electrode active material as the negative electrode active material to implement electrical activity through a reversible redox reaction during charging and discharging of the battery.

The carbon-based negative electrode active material refers to a material having carbon atoms as its main component, and such a carbon-based negative electrode active material may include graphite. The graphite may include one or more of natural graphite and artificial graphite.

In one example, the carbon-based negative electrode active material may include a mixed graphite, which is a blend of natural and artificial graphite. In this case, the mixed graphite may be a blend of natural graphite and artificial graphite in a weight ratio of 10 to 50:50 to 90, or 10 to 30:70 to 90. By adjusting the content ratio of natural graphite and artificial graphite as described above, the mixed graphite can prevent the adhesion of the negative electrode current collector 210 and the negative electrode active material layer 220 from being reduced due to natural graphite of less than 10 parts by weight relative to the total weight, and can prevent the charge and discharge capacity of the negative electrode from being reduced due to natural graphite exceeding 50 parts by weight.

Furthermore, the carbon-based negative electrode active material is not particularly limited in form, but preferably has the form of a spherical graphite assembly formed by aggregation of a plurality of flake graphite. Aside from natural graphite and artificial graphite, the flake graphite can be mesophase calcined carbon (bulk mesophase) based on tar and pitch, graphitized cokes (raw cokes, green cokes, pitch cokes, needle cokes, petroleum cokes, etc.), and the like. In particular, the carbon-based negative electrode active material is preferably assembled using a plurality of highly crystalline natural graphite. Furthermore, one graphite assembly may be formed from 2 to 100 pieces of flake graphite, preferably 3 to 20 pieces.

In addition, the carbon-based negative electrode active material may have an average particle diameter (D₅₀) of 0.5 µm to 20 µm, and more specifically, may have an average particle diameter (D₅₀) of 0.5 µm to 15 µm; 0.5 µm to 10 µm; 5 µm to 20 µm; 10 µm to 20 µm; 12 µm to 18 µm; 2 µm to 7 µm; 0.5 µm to 5 µm; or 1 µm to 3 µm.

The average particle size of carbon-based negative electrode active materials can be advantageous to have a smaller particle size to maximize the disorder in the direction of expansion for each particle to prevent the particles from expanding due to the charging of lithium ions. However, if the graphite has a particle diameter of less than 0.5 µm, a large amount of binder may be required due to the increase in the number of particles per unit volume. On the other hand, if the maximum particle size exceeds 20 µm, the expansion can be severe, resulting in poor interparticle cohesion and particle-to-current collector cohesion with repeated charge and discharge, which can significantly reduce the cycling characteristics.

Furthermore, the negative electrode 200 may include a predetermined silicon-based negative electrode active material along with the carbon-based negative electrode active material in the negative electrode active material layer 220. The silicon-based negative electrode active material is a material including silicon (Si) as a main component, and may include silicon (Si), silicon carbide (SiC), silicon monoxide (SiO), or silicon dioxide (SiO₂) alone or in combination. When silicon monoxide (SiO) and silicon dioxide (SiO₂) as the silicon-based negative electrode active materials are uniformly mixed or compounded and included in the negative electrode active material layer 220, they may be denoted as silicon oxide (SiO_{q}, wherein 0.8≤q≤2.5).

In addition, the negative electrode active material may be included to be at least 85 parts by weight of the negative electrode active material layer 220, and more specifically may be included to be at least 90 parts by weight, at least 93 parts by weight, or at least 95 parts by weight.

Moreover, the silicon-based negative electrode active material may be included from 0.1 to 30wt% of the total weight of the negative electrode active material, more particularly from 0.5 to 20wt%, 1 to 9wt%, 5 to 15wt%, 3 to 7wt%, 11 to 19wt%, 13 to 17wt%, 15 to 20wt%, 10 to 30wt%, 20 to 30wt%, 15 to 25wt%, or 9 to 22wt%. By adjusting the content of carbon-based negative electrode active material and silicon-based negative electrode active material in the negative electrode active material to the above ranges, the present invention can improve the charge capacity per unit weight while reducing the lithium consumption and irreversible capacity loss during the initial charge and discharge of the lithium secondary battery. In addition, by minimizing the volume change of the negative electrode active material layer 220 during charging and discharging of the lithium secondary battery, the structural stability of the negative electrode active material layer 220 can be improved, thereby increasing the lifetime of the lithium secondary battery.

Meanwhile, the negative electrode active material layer 220 may optionally further include, in addition to the main component carbon-based negative electrode active material, a conductive material, a binder, other additives, and the like, as desired.

The conductive material may include one or more types among carbon black such as acetylene black, ketjen black, etc.; carbon nanotubes; carbon fibers; etc., but is not limited thereto.

In one example, the negative electrode active material layer 220 may contain carbon black, carbon nanotubes, carbon fiber, or the like as a conductive material, either alone or in combination.

In this case, the content of the conductive material may be 0.1 to 10 parts by weight, more specifically, 0.1 to 8 parts by weight, 0.1 to 5 parts by weight, 0.1 to 3 parts by weight, 2 to 6 parts by weight, or 0.5 to 2 parts by weight, based on a total of 100 parts by weight of the negative electrode active material layer. By controlling the content of the coating material to a range as described above, the present invention can prevent the resistance of the negative electrode from increasing due to a low content of the coating material, resulting in a decrease in the charging capacity, and can prevent the content of the negative electrode active material from decreasing due to an excess of the conductive material, resulting in a decrease in the charging capacity, or the rapid charging characteristics from decreasing due to an increase in the loading amount of the negative electrode active material layer 220.

Furthermore, the binder may be suitably applied as a component that assists in the bonding between the negative electrode active material and the conductive material and the bonding to the current collector and the like to the extent that it does not degrade the electrical properties of the electrode. Specifically, it may include one or more selected from the group consisting of polyvinylidene fluoride-hexafluoropropylene copolymer (PVdF-co-HFP), polyvinylidenefluoride (PVdF), polyacrylonitrile, and polymethylmethacrylate, polyvinyl alcohol, carboxymethylcellulose (CMC), starch, hydroxypropylcellulose, regenerated cellulose, polyvinylpyrrolidone, polytetrafluoroethylene, polyethylene, polypropylene, polyacrylic acid, ethylene-propylene-diene monomer, sulfonated ethylene-propylene-diene monomer, styrene butadiene rubber (SBR), and fluoro elastomer.

The content of the binder may be 0.1 to 10 parts by weight, more specifically 0.1 to 8 parts by weight, 0.1 to 5 parts by weight, 0.1 to 3 parts by weight, or 2 to 6 parts by weight, based on 100 parts by weight of the negative electrode active material layer 220 as a whole. By controlling the content of the binder contained in the negative electrode active material layer 220 to the above range, the present invention can prevent the adhesion of the negative electrode active material layer 220 from deteriorating due to a low content of binder or the electrical properties of the electrode from deteriorating due to an excess of binder.

Furthermore, the average thickness of the negative electrode active material layer 220 may be from 100 µm to 300 µm, more specifically, from 100 µm to 250 µm; or from 130 µm to 190 µm, and the average thickness may be the same as the average thickness of the flat portion. By adjusting the average thickness of the negative electrode active material layer 220 to the above range, the present invention can improve the high-rate charge/discharge performance and energy density of the battery including the negative electrode.

Furthermore, the negative electrode current collector 210 is not particularly limited as long as it has a high conductivity without causing chemical changes in the battery, and for example, copper, stainless steel, nickel, titanium, calcined carbon, and the like can be used, and in the case of copper or stainless steel, those that are surface-treated with carbon, nickel, titanium, silver, and the like can also be used. Furthermore, the average thickness of the negative electrode current collector 210 may be suitably applied from 1 to 500µm, considering the conductivity and total thickness of the negative electrode being manufactured.

Furthermore, the separator 300 may be an insulating thin film having high ionic permeability and mechanical strength, and is not particularly limited as long as it is conventionally used in the art, but may use those including one or more polymers such as polypropylene; polyethylene; polyethylene-propylene copolymers, which are chemically resistant and hydrophobic. The separator 300 may have the form of a porous polymeric substrate such as a sheet or nonwoven fabric including any of the above-described polymers, and in some cases may have the form of a composite separator in which organic or inorganic particles are coated by an organic binder on the porous polymeric substrate. Furthermore, the separator 300 may have an average pore diameter from 0.01 to 10 µm, and an average thickness from 5 to 300 µm.

Meanwhile, the electrode assembly according to the present invention may be applied to lithium secondary batteries in forms that may include, but are not limited to, stack-type; zigzag; or zigzag-stack type electrode assemblies. As one example, the electrode assembly according to the present invention can be applied to a zigzag lithium secondary battery or a zigzag-stack type lithium secondary battery.

Zigzag lithium secondary batteries and/or zigzag-stack type lithium secondary batteries have the advantage of being highly productive and utilizable in terms of energy density, as the unit cells of the lithium secondary battery can be packed at a high density within a limited space.

Hereinafter, the present invention will be described in more detail by way of Examples and Experimental Examples.

However, the following Examples and Experimental Examples are illustrative of the present invention, and the present invention is not limited to the following examples being defined by the appended claims.

### Examples 1-10 and Comparative Examples 1-2. Preparation of Positive Electrode for Lithium Secondary Batteries

Aluminum thin plates (length 20 cm, width 20 cm, and thickness 10 µm) were prepared, and an insulating layer coating composition, positive electrode slurry, and auxiliary insulating layer coating composition were prepared, respectively.

Specifically, the insulating layer coating composition and the auxiliary insulating layer coating composition were each prepared by weighing and uniformly mixing 30 parts by weight of aluminum oxide (Al₂O₃) and 70 parts by weight of PVdF. Here, the insulating layer coating composition and the auxiliary insulating layer coating composition were each adjusted to have a solids content of 3 to 10%.

In addition, the positive electrode slurry was prepared by weighing 97.5 parts by weight of LiNi_{0.7}Co_{0.1}Mn_{0.2}O₂ as the positive electrode active material; 1 part by weight of carbon nanotubes as the conductive material; and 1.5 parts by weight of PVdF as the binder, and mixing them with N-methylpyrrolidone. At this time, the solids content of the prepared positive electrode slurry was about 65%.

Thereafter, the prepared aluminum thin plate was first patterned with the insulating layer coating composition, and the aluminum thin plate to which the insulating layer coating composition was successively applied was simultaneously coated with a positive electrode slurry and an auxiliary insulating layer coating composition. It was then dried in a 120°C vacuum oven and rolled. The rolled electrode sheet was punched to prepare a positive electrode for a lithium secondary battery having an insulating layer formed at the boundary of the positive electrode active material layer and the inside of the sliding portion, as shown in FIG. 2.

In this case, the flat portion included in the positive electrode active material layer was formed to have a total length of about 27 cm based on the cross-sectional structure A-A'. Furthermore, the average thickness of the flat portion was about 120 µm based on the cross-sectional structure A-A'; the lengths of the sliding portion and the boundary portion were 5 mm and 5 mm, respectively, based on the cross-sectional structure A-A'. In addition, when the auxiliary insulating layer was formed, the length of the auxiliary insulating layer was 5 mm based on the cross-sectional structure A-A'. Furthermore, the length and average thickness of the insulating layer contained inside the sliding portion and whether the auxiliary insulating layer is formed are shown in Table 1.

**[Table 1]**

| | Insulating layer | | Including auxiliary insulating layer or not |
|---|---|---|---|
| | Length [mm] | Height [µm] | |
| Example 1 | 4 | 6 | X |
| Example 2 | 4 | 12 | X |
| Example 3 | 6 | 6 | X |
| Example 4 | 4 | 12 | O |
| Example 5 | 2 | 12 | X |
| Example 6 | 35 | 12 | X |
| Example 7 | 4 | 2 | X |
| Example 8 | 4 | 40 | X |
| Example 9 | 2 | 2 | X |
| Example 10 | 35 | 40 | X |
| Comparative Example 1 | - | - | X |
| Comparative Example 2 | - | - | O |

### Example 11. Preparation of Positive Electrode for Lithium Secondary Batteries

A positive electrode for a lithium secondary battery was prepared by performing the same method as in Example 1, except that an insulating layer was formed only on the inside of the sliding portion of the positive electrode active material layer. In this case, the length of the insulating layer provided in the positive electrode was 2 mm and the height was 2µm.

### Experimental Example.

To evaluate the performance of the positive electrode prepared according to the present invention, the following experiments were performed.

### a) Measurement of Inclination Angle of Sliding Portion

Scanning electron microscopy (SEM) images of cross-sections of the positive electrodes prepared in Examples 1-11 and Comparative Examples 1 and 2, respectively, were taken to measure the inclination angle (or sliding angle) of the sliding portion of the active material layer, and the results are shown in Table 2 below.

### b) Evaluation of N/P Ratio and Lithium Precipitation in the Electrode Assembly

A negative electrode active material in which natural graphite and artificial graphite are mixed in a weight ratio of 1:1 was prepared, and 97 parts by weight of the negative electrode active material and 3 parts by weight of styrene butadiene rubber (SBR) were mixed with water to form a slurry, cast on a copper thin plate (length 150cm, width 22cm, and thickness 10 µm), dried in a 130°C vacuum oven, and rolled to prepare the negative electrode. At this time, the prepared negative electrode was adjusted so that the average thickness and the capacity per unit area of the negative electrode active material layer were the same as the average thickness and the capacity per unit area of the positive electrode active material layer of the positive electrode. Furthermore, the length and height of the boundary and sliding portions of the negative electrode active material layer were adjusted to be the same as the length and height of the boundary and sliding portions of the positive electrode active material layer.

An electrode assembly was made by stacking the five manufactured negative electrodes and each of the five positive electrodes manufactured in Examples 1-11 and Comparative Examples 1-2 in such a way that they are arranged alternately, and an 18 µm thick polypropylene separator was interposed between them. At this time, the negative electrode was assembled so that the sliding portion of the negative electrode active material layer was disposed about 2 mm outwardly from the sliding portion of the positive electrode active material layer based on the cross-sectional structure A-A'.

Based on the boundary between the flat portion and the boundary portion of the negative electrode active material layer inserted into the manufactured electrode assembly, the outer side (i.e., corresponding to the boundary and sliding portions of the negative electrode active material layer) was defined as the "end of the electrode assembly", and the capacity per unit area (N/P ratio) of the end of the electrode assembly was measured. Specifically, to calculate the capacity per unit area (N/P ratio), ① a natural logarithmic graph regression equation was first derived to represent the position of the boundary and sliding portions of the positive electrode active material layer included in the end of the electrode assembly at any point based on the cross-sectional structure A-A'. Then, ② the area of the negative electrode active material layer and the positive electrode active material layer contacting with each other at the end of the electrode assembly was calculated by integration, and the area of the insulating layer at that location was subtracted to obtain the capacity per unit area (N/P ratio).

The manufactured electrode assembly was then inserted into the pouch case and electrolyte was injected. The electrolyte was a liquid electrolyte in which LiPF₆ as a lithium salt was added to an organic solvent composed of ethylene carbonate (EC) and ethyl methyl carbonate (EMC) mixed in a volume ratio of 3:7. A pouch-type lithium secondary battery was manufactured by sealing a pouch case injected with the electrolyte, and the manufactured lithium secondary battery was charged in constant current (CC) mode at 0.33C until the voltage reached 4.8V at 45°C. Afterwards, the lithium secondary battery was discharged until the voltage reached 2.5V in constant current (CC) mode at 0.33C, and then further discharged in constant voltage (CV) mode until the current value was reduced to 0.05% of the initial current value to activate the lithium secondary battery.

Then, the same charge and discharge operation was then performed up to a total of 3,000 times, after which the lithium secondary battery was disassembled and the electrode assembly was visually observed to check for precipitation of lithium metal. The results are shown in Table 2.

### c) Evaluation of Energy Density of the Battery

Pouch-type lithium secondary batteries were manufactured using the same method as the previously manufactured lithium secondary batteries, and the energy per unit volume was analyzed by charging and discharging each manufactured lithium secondary battery. Here, the charge and discharge were performed between 2.5V and 4.2V, and the charge was measured as CC/CV and the discharge as CC. The C-rate measurement criteria confirmed the energy of 3C, considering 60A as 1C, and a relative comparison of each measured energy density based on the energy density of Example 1 was performed and is shown in Table 2.

**[Table 2]**

| | Sliding angle | Whether lithium metal precipitated | N/P ratio | Energy density ratio compared to Example 1 |
|---|---|---|---|---|
| Example 1 | Approx. 85° | X | Approx. 1.00 | Approx. 100% |
| Example 2 | Approx. 87° | X | Approx. 1.01 | Approx. 100% |
| Example 3 | Approx. 86° | X | Approx. 1.01 | Approx. 100% |
| Example 4 | Approx. 87° | X | Approx. 1.04 | Approx. 100% |
| Example 5 | Approx. 75° | X | Approx. 1.04 | Approx. 100% |
| Example 6 | Approx. 87° | X | Approx. 1.08 | Approx. 97% |
| Example 7 | Approx. 77° | X | Approx. 1.01 | Approx. 100% |
| Example 8 | Approx. 86° | O | Approx. 1.13 | Approx. 97% |
| Example 9 | Approx. 71° | O | Approx. 0.99 | Approx. 100% |
| Example 10 | Approx. 88° | O | Approx. 1.19 | Approx. 96% |
| Example 11 | Approx. 74° | O | Approx. 0.98 | Approx. 101% |
| Comparative Example 1 | Approx. 68° | O | Approx. 0.99 | Approx. 100% |
| Comparative Example 2 | Approx. 71° | O | Approx. 0.99 | Approx. 100% |

It can be seen that the positive electrode for a lithium secondary battery according to the present invention is easy to control the angle and/or shape of the sliding portion included in the edge of the active material layer, easy to control the N/P ratio of the electrode assembly, and has a high energy density.

Specifically, the positive electrodes produced in Examples 1-8 and 10 were found to have a high inclination angle of the sliding portion of 75° or more (specifically, about 80° or more or about 84° or more). In addition, the lithium secondary batteries including them were found to have an N/P ratio of 1 or more, so that no lithium is precipitated from the negative electrode during charge and discharge. However, in the positive electrodes of Examples 8 and 10, it was confirmed that due to the high thickness of the insulating layer, it was difficult to control the shape of the end of the positive electrode active material layer, i.e., the sliding portion, resulting in a lifting phenomenon during assembly of the electrode assembly.

In addition, the lithium secondary battery including the positive electrodes prepared in the Examples was found to have excellent energy density.

From these results, it can be seen that the positive electrode for a lithium secondary battery according to the present invention includes an insulating layer and a positive electrode active material layer sequentially on the positive electrode current collector, but has a cross-sectional structure in which the insulating layer is completely covered on the inside of the edge of the positive electrode active material layer, so that the shape of the edge (or end) of the positive electrode active material layer is easy to control, and the capacity per unit area/per unit weight of the end of the positive electrode active material layer is significantly reduced, so that the N/P ratio of the electrode assembly is easy to control.

While the foregoing has been described with reference to preferred embodiments of the invention, it will be understood by those skilled in the art or having ordinary knowledge of the art that various modifications and changes can be made to the invention without departing from the the patent claims that will follow.

Therefore, the technical scope of the invention is not limited to what is described in the detailed description of the specification, but must be determined by the claims of the patent.

### [Reference numerals]

1: POSITIVE ELECTRODE FOR LITHIUM SECONDARY BATTERY
10: POSITIVE ELECTRODE CURRENT COLLECTOR
20: INSULATING LAYER
30: ACTIVE MATERIAL LAYER
31: BOUNDARY PORTION AND FLAT PORTION
31a: BOUNDARY PORTION
31b: FLAT PORTION
32: SLIDING PORTION
40: AUXILIARY INSULATING LAYER
50: NON-COATED PORTION
100: POSITIVE ELECTRODE
110: POSITIVE ELECTRODE CURRENT COLLECTOR
120: POSITIVE ELECTRODE INSULATING LAYER
130: POSITIVE ELECTRODE ACTIVE MATERIAL LAYER
140: POSITIVE ELECTRODE AUXILIARY INSULATING LAYER
200: NEGATIVE ELECTRODE
210: NEGATIVE ELECTRODE CURRENT COLLECTOR
220: NEGATIVE ELECTRODE ACTIVE MATERIAL LAYER
C: COATING DIRECTION OF INSULATING LAYER AND ACTIVE MATERIAL LAYER
S: CUTTING LINE DURING PUNCHING (OR NOTCHING)

## Claims

1. A positive electrode (1, 100) for lithium secondary battery comprising:
a positive electrode current collector (10, 110),
an insulating layer (20, 120) provided on at least one side of the positive electrode current collector (10, 110), and
a positive electrode active material layer (30, 130) provided on the insulating layer (20, 120);
wherein the positive electrode active material layer (30, 130) is divided into a flat portion (31b) located in a center region and having a constant thickness, a sliding portion (32) located at an edge of the flat portion and having a thickness gradient, and a boundary portion (31a) located between the flat portion (31b) and the sliding portion (32), based on a cross-sectional structure transversal from one side where the positive electrode tabs are disposed to the other side where the positive electrode tabs are not disposed; and
wherein the insulating layer (20, 120) is located on the inside of at least one of the sliding portion (32) and the boundary portion (31a); and
wherein the insulating layer (20, 120) is discontinuously disposed on the positive electrode current collector (10, 110) based on a cross-sectional structure transversal from one side where positive electrode tabs are disposed to the other side where the positive electrode tabs are not disposed and has a structure completely covered by the positive electrode active material layer (30, 130).

2. The positive electrode (1, 100) for lithium secondary battery of claim 1, wherein the insulating layer (20, 120) has a length of 30mm or less based on a cross-sectional structure transversal from one side where the positive electrode tabs are disposed to the other side where the positive electrode tabs are not disposed.

3. The positive electrode (1, 100) for lithium secondary battery of claim 1, wherein the insulating layer (20, 120) has a thickness ratio of 30% or less with respect to the average thickness of the flat portion (31b).

4. The positive electrode (1, 100) for lithium secondary battery of claim 1, wherein the insulating layer (20, 120) comprises:
one or more metal oxides selected from the group consisting of Al₂O₃, Cr₂O₃, TiO₂, SiO₂, ZrO₂, and Fe₂O₃; and
one or more binders selected from the group consisting of polyvinylidene fluoride (PVdF), polyvinylidene fluoride copolymer, polyvinyl alcohol, polyethylene oxide, cellulose acetate, polyacrylonitrile, polyacrylate rubber, polymethacrylate, polyvinyl acetate, and styrene-butadiene rubber.

5. The positive electrode (1, 100) for lithium secondary battery of claim 1, wherein the insulating layer (20, 120) comprises 50 wt% or less of a metal oxide; and 50 wt% or more of a binder.

6. The positive electrode (1, 100) for lithium secondary battery of claim 1, wherein the sliding portion (32) of the positive electrode active material layer (30 130) further comprises an auxiliary insulating layer (40, 140) on the outer side, based on a cross-sectional structure transversal from one side where the positive electrode tabs are disposed to the other side where the positive electrode tabs are not disposed.

7. The positive electrode (1, 100) for lithium secondary battery of claim 6, wherein the auxiliary insulating layer (40, 140) comprises:
one or more metal oxides selected from the group consisting of Al₂O₃, Cr₂O₃, TiO₂, SiO₂, ZrO₂, and Fe₂O₃; and
one or more binders selected from the group consisting of polyvinylidene fluoride (PVdF), polyvinylidene fluoride copolymer, polyvinyl alcohol, polyethylene oxide, cellulose acetate, polyacrylonitrile, polyacrylate rubber, polymethacrylate, polyvinyl acetate, and styrene-butadiene rubber.

8. A manufacturing method of a positive electrode (1, 100) for lithium secondary battery comprising:
forming an insulating layer (20, 120) provided on at least one side of a positive electrode current collector (10, 110), and
forming a positive electrode active material layer (30, 130) provided on the insulating layer (20, 120) that has been formed;
wherein the insulating layer (20, 120) is patterned along the traveling direction of the positive electrode current collector (10, 110), and is discontinuously disposed on the positive electrode current collector (10, 110) and having a structure completely covered by the positive electrode active material layer (30, 130), based on a cross-sectional structure transversal from one side where the positive electrode tabs are disposed to the other side where the positive electrode tabs are not disposed.

9. The manufacturing method of a positive electrode (1, 100) for lithium secondary battery of claim 8, wherein forming the insulating layer (20, 120) is performed using a slot die coater, a slot nozzle coater, or a gravure coater.

10. The manufacturing method of a positive electrode (1, 100) for lithium secondary battery of claim 8, wherein forming the active material layer (30, 130) is performed by a wet process using a positive electrode slurry comprising a positive electrode active material and a binder; or a dry process using a film for the positive electrode comprising a positive electrode active material and a binder.

11. The manufacturing method of a positive electrode (1, 100) for lithium secondary battery of claim 8, wherein forming the active material layer (30, 130) further comprises forming an auxiliary insulating layer (40, 140) on the outer side of the sliding portion (32) of an active material layer (30, 130) that has been formed.

12. An electrode assembly for lithium secondary battery comprising:
a positive electrode (1, 100) according to claim 1;
a negative electrode (200); and
a separator disposed between the positive electrode (1, 100) and negative electrode (200).

## Patentansprüche

1. Positive Elektrode (1, 100) für eine Lithiumsekundärbatterie, umfassend:
einen Positive-Elektrode-Stromkollektor (10, 110),
eine Isolierschicht (20, 120), welche auf wenigstens einer Seite des Positive-Elektrode-Stromkollektors (10, 110) bereitgestellt ist, und
eine Positive-Elektrode-Aktivmaterialschicht (30, 130), welche auf der Isolierschicht (20, 120) bereitgestellt ist;
wobei die Positive-Elektrode-Aktivmaterialschicht (30, 130), auf Grundlage einer Querschnittsstruktur transversal von einer Seite, an welcher die Positive-Elektrode-Laschen angeordnet sind, zu der anderen Seite, an welcher die Positive-Elektrode-Laschen nicht angeordnet sind, unterteilt ist in einen flachen Abschnitt (31b), welcher sich in einem mittleren Bereich befindet und eine konstante Dicke aufweist, einen Gleitabschnitt (32), welcher sich an einem Rand des flachen Abschnitts befindet und einen Dickengradienten aufweist, und einen Grenzabschnitt (31a), welcher sich zwischen dem flachen Abschnitt (31b) und dem Gleitabschnitt (32) befindet; und
wobei sich die Isolierschicht (20, 120) an der Innenseite wenigstens eines aus dem Gleitabschnitt (32) und dem Grenzabschnitt (31a) befindet; und
wobei die Isolierschicht (20, 120), auf Grundlage einer Querschnittsstruktur transversal von einer Seite, an welcher die Positive-Elektrode-Laschen angeordnet sind, zu der anderen Seite, an welcher die Positive-Elektrode-Laschen nicht angeordnet sind, diskontinuierlich auf dem Positive-Elektrode-Stromkollektor (10, 110) angeordnet ist und eine Struktur aufweist, welche vollständig durch die Positive-Elektrode-Aktivmaterialschicht (30, 130) abgedeckt ist.

2. Positive Elektrode (1, 100) für eine Lithiumsekundärbatterie nach Anspruch 1, wobei die Isolierschicht (20, 120), auf Grundlage einer Querschnittsstruktur transversal von einer Seite, an welcher die Positive-Elektrode-Laschen angeordnet sind, zu der anderen Seite, an welcher die Positive-Elektrode-Laschen nicht angeordnet sind, eine Länge von 30 mm oder weniger aufweist.

3. Positive Elektrode (1, 100) für eine Lithiumsekundärbatterie nach Anspruch 1, wobei die Isolierschicht (20, 120) in Bezug auf die durchschnittliche Dicke des flachen Abschnitts (31b) ein Dickenverhältnis von 30 % oder weniger aufweist.

4. Positive Elektrode (1, 100) für eine Lithiumsekundärbatterie nach Anspruch 1, wobei die Isolierschicht (20, 120) umfasst:
ein oder mehrere Metalloxide, ausgewählt aus der Gruppe bestehend aus Al₂O_{3,} Cr₂O₃, TiO₂, SiO₂, ZrO₂ und Fe₂O₃; und
ein oder mehrere Bindemittel, ausgewählt aus der Gruppe bestehend aus Polyvinylidenfluorid (PVdF), Polyvinylidenfluorid-Copolymer, Polyvinylalkohol, Polyethylenoxid, Celluloseacetat, Polyacrylnitril, Polyacrylatkautschuk, Polymethacrylat, Polyvinylacetat und Styrol-Butadien-Kautschuk.

5. Positive Elektrode (1, 100) für eine Lithiumsekundärbatterie nach Anspruch 1, wobei die Isolierschicht (20, 120) 50 Gew.-% oder weniger eines Metalloxids und 50 Gew.-% oder mehr eines Bindemittels umfasst.

6. Positive Elektrode (1, 100) für eine Lithiumsekundärbatterie nach Anspruch 1, wobei der Gleitabschnitt (32) der Positive-Elektrode-Aktivmaterialschicht (30, 130), auf Grundlage einer Querschnittsstruktur transversal von einer Seite, an welcher die Positive-Elektrode-Laschen angeordnet sind, zu der anderen Seite, an welcher die Positive-Elektrode-Laschen nicht angeordnet sind, ferner eine Hilfsisolierschicht (40, 140) auf der Außenseite umfasst.

7. Positive Elektrode (1, 100) für eine Lithiumsekundärbatterie nach Anspruch 6, wobei die Hilfsisolierschicht (40, 140) umfasst:
ein oder mehrere Metalloxide, ausgewählt aus der Gruppe bestehend aus Al₂O_{3,} Cr₂O₃, TiO₂, SiO₂, ZrO₂ und Fe₂O₃; und
ein oder mehrere Bindemittel, ausgewählt aus der Gruppe bestehend aus Polyvinylidenfluorid (PVdF), Polyvinylidenfluorid-Copolymer, Polyvinylalkohol, Polyethylenoxid, Celluloseacetat, Polyacrylnitril, Polyacrylatkautschuk, Polymethacrylat, Polyvinylacetat und Styrol-Butadien-Kautschuk.

8. Herstellungsverfahren einer positiven Elektrode (1, 100) für eine Lithiumsekundärbatterie, umfassend:
Bilden einer Isolierschicht (20, 120), welche auf wenigstens einer Seite eines Positive-Elektrode-Stromkollektors (10, 110) bereitgestellt ist, und
Bilden einer Positive-Elektrode-Aktivmaterialschicht (30, 130), welche auf der Isolierschicht (20, 120) bereitgestellt ist, die gebildet worden ist;
wobei die Isolierschicht (20, 120) entlang der Laufrichtung des Positive-Elektrode-Stromkollektors (10, 110) gemustert ist und, auf Grundlage einer Querschnittsstruktur transversal von einer Seite, an welcher die Positive-Elektrode-Laschen angeordnet sind, zu der anderen Seite, an welcher die Positive-Elektrode-Laschen nicht angeordnet sind, diskontinuierlich auf dem Positive-Elektrode-Stromkollektor (10, 110) angeordnet ist und eine Struktur aufweist, welche vollständig durch die Positive-Elektrode-Aktivmaterialschicht (30, 130) abgedeckt ist.

9. Herstellungsverfahren einer positiven Elektrode (1, 100) für eine Lithiumsekundärbatterie nach Anspruch 8, wobei das Bilden der Isolierschicht (20, 120) unter Verwendung eines Schlitzdüsenbeschichters (Slot-Die-Coater), eines Schlitzdüsenbeschichters (Slot-Nozzle-Coater) oder eines Gravurbeschichters durchgeführt wird.

10. Herstellungsverfahren einer positiven Elektrode (1, 100) für eine Lithiumsekundärbatterie nach Anspruch 8, wobei das Bilden der Aktivmaterialschicht (30, 130) durchgeführt wird durch ein Nassverfahren unter Verwendung einer Positive-Elektrode-Aufschlämmung, welche ein Positive-Elektrode-Aktivmaterial und ein Bindemittel umfasst; oder ein Trockenverfahren unter Verwendung einer Folie für die positive Elektrode, welche ein Positive-Elektrode-Aktivmaterial und ein Bindemittel umfasst.

11. Herstellungsverfahren einer positiven Elektrode (1, 100) für eine Lithiumsekundärbatterie nach Anspruch 8, wobei das Bilden der Aktivmaterialschicht (30, 130) ferner ein Bilden einer Hilfsisolierschicht (40, 140) auf der Außenseite des Gleitabschnitts (32) der Aktivmaterialschicht (30, 130) umfasst, welche gebildet worden ist.

12. Elektrodenanordnung für eine Lithiumsekundärbatterie, umfassend:
eine positive Elektrode (1, 100) nach Anspruch 1;
eine negative Elektrode (200); und
einen Separator, welcher zwischen der positiven Elektrode (1, 100) und der negativen Elektrode (200) angeordnet ist.

## Revendications

1. Électrode positive (1, 100) pour batterie secondaire au lithium, comprenant :
un collecteur de courant (10, 110) d'électrode positive,
une couche isolante (20, 120) prévue sur au moins un côté du collecteur de courant (10, 110) d'électrode positive, et
une couche de matériau actif (30, 130) d'électrode positive prévue sur la couche isolante (20, 120) ;
dans laquelle la couche de matériau actif (30, 130) d'électrode positive est divisée en une partie plate (31b) située dans une région centrale et ayant une épaisseur constante, une partie coulissante (32) située au niveau d'un bord de la partie plate et ayant un gradient d'épaisseur, et une partie limite (31a) située entre la partie plate (31b) et la partie coulissante (32), sur la base d'une structure en coupe transversale d'un côté où les languettes d'électrode positives sont disposées vers l'autre côté où les languettes d'électrode positives ne sont pas disposées ; et
dans laquelle la couche isolante (20, 120) est située à l'intérieur d'au moins une parmi la partie coulissante (32) et la partie limite (31a) ; et
dans laquelle la couche isolante (20, 120) est disposée de manière discontinue sur le collecteur de courant d'électrode positive (10, 110) sur la base d'une structure en coupe transversale d'un côté où des languettes d'électrode positive sont disposées vers l'autre côté où les languettes d'électrode positive ne sont pas disposées et présente une structure entièrement recouverte par la couche de matériau actif (30, 130) d'électrode positive.

2. Électrode positive (1, 100) pour batterie secondaire au lithium selon la revendication 1, dans laquelle la couche isolante (20, 120) a une longueur de 30 mm ou moins sur la base d'une structure en coupe transversale d'un côté où les languettes d'électrode positive sont disposées vers l'autre côté où les languettes d'électrode positive ne sont pas disposées.

3. Électrode positive (1, 100) pour batterie secondaire au lithium selon la revendication 1, dans laquelle la couche isolante (20, 120) présente un rapport d'épaisseur de 30 % ou moins par rapport à l'épaisseur moyenne de la partie plate (31b).

4. Électrode positive (1, 100) pour batterie secondaire au lithium selon la revendication 1, dans laquelle la couche isolante (20, 120) comprend :
un ou plusieurs oxydes métalliques sélectionnés dans le groupe constitué de Al₂O₃, Cr₂O₃, TiO₂, SiO₂, ZrO₂, et Fe₂O₃ ; et
un ou plusieurs liants choisis dans le groupe constitué de fluorure de polyvinylidène (PVdF), de copolymère de fluorure de polyvinylidène, d'alcool polyvinylique, d'oxyde de polyéthylène, d'acétate de cellulose, de polyacrylonitrile, de caoutchouc polyacrylate, de polyméthacrylate, d'acétate de polyvinyle et de caoutchouc styrène-butadiène.

5. Électrode positive (1, 100) pour batterie secondaire au lithium selon la revendication 1, dans laquelle la couche isolante (20, 120) comprend 50 % en poids ou moins d'un oxyde métallique ; et 50 % en poids ou plus d'un liant.

6. Électrode positive (1, 100) pour batterie secondaire au lithium selon la revendication 1, dans laquelle la partie coulissante (32) de la couche de matériau actif (30, 130) d'électrode positive comprend en outre une couche isolante auxiliaire (40, 140) sur le côté extérieur, sur la base d'une structure en coupe transversale d'un côté où les languettes d'électrode positive sont disposées vers l'autre côté où les languettes d'électrode positive ne sont pas disposées.

7. Électrode positive (1, 100) pour batterie secondaire au lithium selon la revendication 6, dans laquelle la couche isolante auxiliaire (40, 140) comprend :
un ou plusieurs oxydes métalliques sélectionnés dans le groupe constitué de Al₂O₃, Cr₂O₃, TiO₂, SiO₂, ZrO₂, et Fe₂O₃ ; et
un ou plusieurs liants choisis dans le groupe constitué de fluorure de polyvinylidène (PVdF), de copolymère de fluorure de polyvinylidène, d'alcool polyvinylique, d'oxyde de polyéthylène, d'acétate de cellulose, de polyacrylonitrile, de caoutchouc polyacrylate, de polyméthacrylate, d'acétate de polyvinyle et de caoutchouc styrène-butadiène.

8. Procédé de fabrication d'une électrode positive (1, 100) pour batterie secondaire au lithium comprenant :
la formation d'une couche isolante (20, 120) prévue sur au moins un côté d'un collecteur de courant (10, 110) d'électrode positive, et
la formation d'une couche de matériau actif (30, 130) d'électrode positive prévue sur la couche isolante (20, 120) qui a été formée ;
dans lequel la couche isolante (20, 120) est disposée selon un motif le long de la direction de déplacement du collecteur de courant (10, 110) d'électrode positive, et est disposée de manière discontinue sur le collecteur de courant (10, 110) d'électrode positive et ayant une structure entièrement recouverte par la couche de matériau actif (30, 130) d'électrode positive, sur la base d'une structure en coupe transversale d'un côté où les languettes d'électrode positive sont disposées vers l'autre côté où les languettes d'électrode positive ne sont pas disposées.

9. Procédé de fabrication d'une électrode positive (1, 100) pour batterie secondaire au lithium selon la revendication 8, dans lequel la formation de la couche isolante (20, 120) est réalisée à l'aide d'une enduiseuse à filière à fente, d'une enduiseuse à buse à fente ou d'une enduiseuse par héliogravure.

10. Procédé de fabrication d'une électrode positive (1, 100) pour batterie secondaire au lithium selon la revendication 8, dans lequel la formation de la couche de matériau actif (30, 130) est réalisée par un procédé humide utilisant une suspension d'électrode positive comprenant un matériau actif d'électrode positive et un liant ; ou un procédé sec utilisant un film pour l'électrode positive comprenant un matériau actif d'électrode positive et un liant.

11. Procédé de fabrication d'une électrode positive (1, 100) pour batterie secondaire au lithium selon la revendication 8, dans lequel la formation de la couche de matériau actif (30, 130) comprend en outre la formation d'une couche isolante auxiliaire (40, 140) sur le côté extérieur de la partie coulissante (32) d'une couche de matériau actif (30, 130) qui a été formée.

12. Ensemble d'électrodes pour batterie secondaire au lithium comprenant :
une électrode positive (1, 100) selon la revendication 1 ;
une électrode négative (200) ; et
un séparateur disposé entre l'électrode positive (1, 100) et l'électrode négative (200).
